# EUROPÄISCHE PATENTSCHRIFT

(11) **EP 1 851 159 B1**
(45) Veröffentlichungstag und Bekanntmachung des Hinweises auf die Patenterteilung: **16.09.2009**
(21) Anmeldenummer: 06700852.4
(22) Anmeldetag: 21.01.2006
(51) Int. Cl.: B66C 23/78, B60S 9/12

(54) **STÜTZAUSLEGER FÜR FAHRBARE ARBEITSMASCHINEN**
SUPPORTING BRACKET FOR MOBILE MACHINE TOOLS
BRAS D'APPUI DESTINE A DES MACHINES DE TRAVAIL ROULANTES

(30) Priorität: 17.02.2005 DE 102005007522
(43) Veröffentlichungstag der Anmeldung: 07.11.2007
(73) Patentinhaber: Putzmeister Concrete Pumps GmbH, 72631 Aichtal (DE)
(72) Erfinder: FÜGEL, Dietmar, 72649 Wolfschlugen (DE)
(74) Vertreter: Wolf, Eckhard
(86) Internationale Anmeldenummer: PCT/EP2006/000532
(87) Internationale Veröffentlichungsnummer: WO 2006/087068

(56) Entgegenhaltungen:
- EP-A- 0 072 697
- DE-A1- 2 627 744
- DE-A1- 3 315 753
- DE-A1- 10 032 622
- US-A- 4 266 679

## Beschreibung

Die Erfindung betrifft einen Stützausleger für fahrbare Arbeitsmaschinen, insbesondere für Autobetonpumpen, mit einem an einem Fahrgestell vorzugsweise schwenkbar angeordneten Ausschubkasten, mit einem in den Ausschubkasten eingreifenden, relativ zu diesem verschiebbaren, aus mehreren ineinander geführten Teleskopsegmenten bestehenden Teleskopteil und mit einem am vorderen Ende des ersten Teleskopsegments angeordneten, vorzugsweise vertikal verstellbaren Fußteil, wobei der Ausschubkasten und zumindest ein Teil der Teleskopsegmente Koppelstellen aufweisen, an denen sie im relativ zueinander eingefahrenen Zustand unter Herstellung einer verschiebefesten Verbindung paarweise miteinander kuppelbar sind. Ein Stützausleger für Arbeitsmaschinen dieser Art ist beispielsweise bekannt aus der EP-A-0072697.

Vor allem bei Autobetonpumpen ist es bekannt, zumindest einen Teil der Stützausleger als Mehrfachteleskop auszubilden, das in einen gegenüber dem Fahrgestell schwenkbaren Ausschubkasten eingreift und relativ zu diesem verschiebbar ist. Um auch in beengten Baustellen arbeiten zu können, ist eine Schmalabstützung erforderlich, bei der der Ausstellwinkel und/oder die Ausfahrlänge der Stützausleger gegenüber dem Fahrgestell verkleinert wird.

Ausgehend hiervon liegt der Erfindung die Aufgabe zugrunde, eine fahrbare Arbeitsmaschine der eingangs angegebenen Art bereitzustellen, bei der sich auf einfache und zuverlässige Weise eine Ausfahrposition am Stützausleger für den anschließenden Ausfahrvorgang einstellen lässt, wobei unerwünschte Zwischenpositionen der Teleskopausleger ausgeschlossen werden sollen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der Erfindung liegt der Gedanke zugrunde, dass für die Verbindung der Koppelstellen ein Kupplungsorgan verwendet werden kann, das so ausgebildet ist, dass es mit jeweils zwei ausgewählten Koppelstellen unter Herstellung einer der verschiebefesten Verbindungen kuppelbar ist.

Dies wird erfindungsgemäß dadurch erreicht, dass an den Koppelstellen der Teleskopsegmente Kupplungszapfen angeordnet sind, die im eingefahrenen Zustand der Teleskopsegmente paarweise einen definierten Abstand voneinander aufweisen, und dass ein Kupplungsorgan vorgesehen ist, dass zwei im Abstand der Kupplungszapfen voneinander angeordnete Ausnehmungen zum Aufstecken auf ausgewählte Kupplungszapfen aufweist. Das Kupplungsorgan weist dabei zweckmäßig die Gestalt einer Lasche auf.

Eine bevorzugte Ausgestaltung der Erfindung sieht vor, dass die Koppelstellen im Bereich der vorderen Enden des Ausschubkastens und zumindest eines Teils der Teleskopsegmente angeordnet sind.

Um das Kupplungsorgan auch bei Nichtgebrauch unverlierbar unterbringen zu können, weist der Ausschubkasten zweckmäßig einen weiteren, in definiertem Abstand vom zugehörigen Kupplungszapfen angeordneten Haltezapfen für das Kupplungsorgan auf. Die Kupplungs- und Haltezapfen können eine Querbohrung zur Aufnahme eines vorzugsweise als Federstecker ausgebildeten Sperrglieds aufweisen.

Die Erfindung bezieht sich außerdem auf eine Stützkonstruktion, die mindestens zwei der erfindungsgemäßen Stützausleger aufweist. Außerdem bezieht sich die Erfindung auf eine Arbeitsmaschine, insbesondere eine Autobetonpumpe, die eine erfindungsgemäße Stützkonstruktion aufweist.

Im Folgenden wird die Erfindung anhand eines in der Zeichnung in schematischer Weise dargestellten Ausführungsbeispiels näher erläutert. Es zeigen
- Fig. 1a: eine Seitenansicht einer Autobetonpumpe mit Stützauslegern in Transportstellung;
- Fig. 1b eine: Draufsicht auf die Autobetonpumpe mit Stützauslegern in verschiedenen Stellungen;
- Fig. 2a: und b eine Seitenansicht eines vorderen Stützauslegers in eingefahrenem Zustand sowie einen vergrößerten Ausschnitt des Kupplungsbereichs;
- Fig. 3a: und b eine Seitenansicht des Stützauslegers mit ausgefahrenem erstem Teleskopsegment sowie einen vergrößerten Ausschnitt des Kupplungsbereichs;
- Fig. 4a: und b eine Seitenansicht des Stützauslegers mit ausgefahrenem erstem und zweitem Teleskopsegment sowie einen vergrößerten Ausschnitt des Kupplungsbereichs;
- Fig. 5a: und b eine Seitenansicht des Stützauslegers mit vollständig ausgefahrenen Teleskopsegmenten sowie einen vergrößerten Ausschnitt des Kupplungsbereichs.

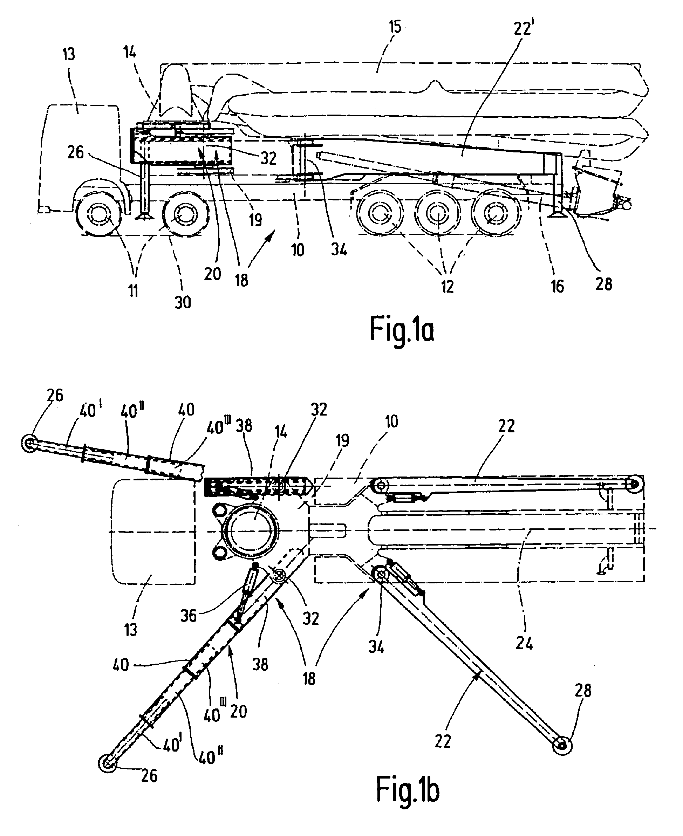

Die in Fig. 1a und b dargestellte Autobetonpumpe besteht im Wesentlichen aus einem mehrachsigen Fahrgestell 10 mit zwei Vorderachsen 11 und drei Hinterachsen 12, mit einem Führerhaus 13, einem an einem vorderachsnahen Drehwerk 14 um eine vertikale Achse drehbar gelagerten Betonverteilermast 15, mit einer im Abstand vom Drehwerk 14 auf dem Fahrgestell 10 montierten Pumpanordnung 16 sowie einer Stützkonstruktion 18 für das Fahrgestell 10. Die Stützkonstruktion 18 weist einen fahrgestellfesten Tragrahmen 19 auf und umfasst zwei vordere Stützausleger 20 und zwei rückwärtige Stützausleger 22, die in der Transportstellung eingezogen und parallel zur Fahrzeuglängsachse 24 ausgerichtet sind und in der Abstützstellung schräg nach vorne bzw. hinten über das Fahrgestell 10 überstehen und mit ihren Fußteilen 26,28 auf dem Boden 30 abgestützt sind.

Die vorderen Stützausleger 20 sind um ihre vertikalen Schwenkachsen 32 und die rückwärtigen Stützausleger 22 um ihre vertikalen Schwenkachsen 34 zwischen der Transportstellung und der Abstützstellung unter der Einwirkung je eines Ausstellzylinders 36 verschwenkbar.

Die vorderen Stützausleger 20 sind als Teleskopausleger ausgebildet. Sie umfassen jeweils einen um die vertikale Schwenkachse 32 gegenüber dem Fahrgestell verschwenkbaren Ausschubkasten 38 und ein aus drei Teleskopsegmenten 40',40",40''' bestehendes Teleskopteil 40. Durch den Ausschubkasten 38 und das Teleskopteil 40 hindurch erstreckt sich ein mehrfach teleskopierbarer, doppelt wirkender Hydrozylinder 42.

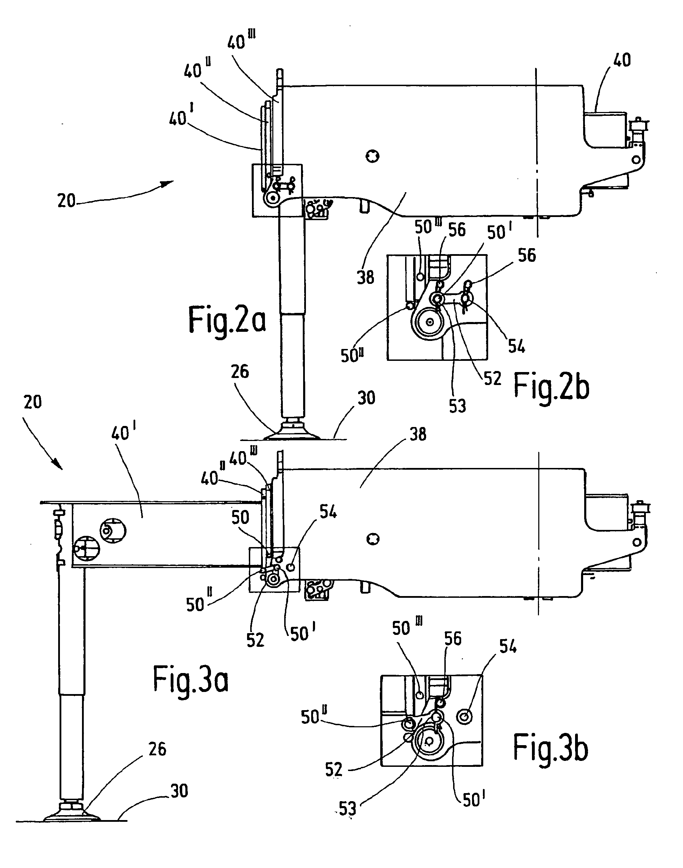

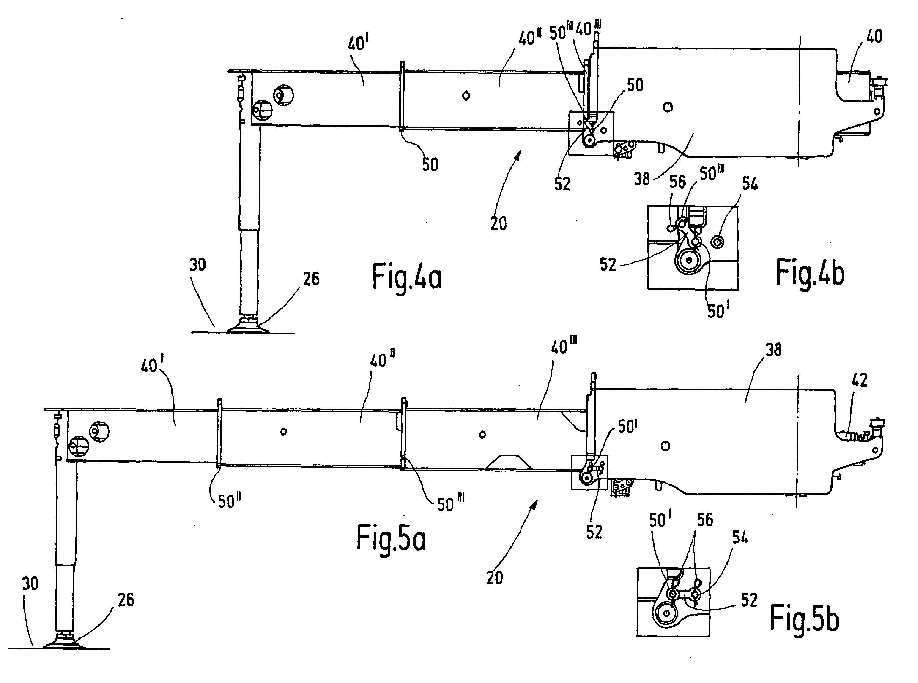

Eine Besonderheit des teleskopierbaren Stützauslegers 20 besteht darin, dass die Teleskopsegmente 40',40",40''' auch einzeln bis zu einem Anschlag ausfahrbar sind (vgl. Fig. 3a bis 5a). Zu diesem Zweck weisen der Ausschubkasten 38 und die beiden Teleskopsegmente 40",40''' jeweils eine als Kupplungszapfen 50',50",50''' ausgebildete Kupplungsstelle auf, an denen sie im relativ zueinander eingefahrenen Zustand unter Herstellung einer verschiebbaren Verbindung paarweise miteinander kuppelbar sind (Fig. 3b und 4b). Die Kupplung erfolgt mit Hilfe eines laschenförmigen Kupplungsorgans 52, das zwei im Abstand voneinander angeordnete Ausnehmungen 53 aufweist und das mit jeweils zwei ausgewählten Kupplungszapfen 50',50" bzw. 50',50''' unter Herstellung einer verschiebefesten Verbindung kuppelbar ist. Ein weiterer Haltezapfen 54 am Ausschubkasten sorgt dafür, dass das Kupplungsorgan bei Nichtgebrauch unverlierbar am Ausschubkasten fixiert werden kann. Die Kupplungszapfen 50',50",50''' weisen außerdem eine Querbohrung auf, in welche ein als Federstecker 56 ausgebildetes Sperrglied zur Sicherung des Kupplungsorgans 52 eingesteckt werden kann. In den in Fig. 2a und b sowie 5a und b gezeigten Positionen befindet sich das Kupplungsorgan in seiner funktionslosen Halterposition, in der es unverlierbar festgehalten wird. Die Teleskopsegmente 40',40",40''' können in dieser Position des Kupplungsorgans von der in Fig. 2a und b gezeigten eingefahrenen Endstellung in die in Fig. 5a und b gezeigte, vollständig ausgefahrene Endstellung verschoben werden.

Im Zustand der Fig. 3a und b erstreckt sich das Kupplungsorgan 52 zwischen den Kupplungszapfen 50' am Ausschubkasten und 50" am freien Ende des zweiten Teleskopsegments 40". Demgemäß kann in diesem Zustand nur das erste Teleskopsegment 40' ausgefahren werden, während die Teleskopsegmente 40" und 40''' in ihrer eingefahrenen Position festgehalten werden.

Bei der in Fig. 4a und b gezeigten Anordnung, bei der sich des Kupplungsorgan 52 zwischen den Kupplungszapfen 50' und 50''' erstreckt, können die beiden Teleskopsegmente 40' und 40" ausgefahren werden, während das Teleskopsegment 40''' über das Kupplungsorgan 52 in seiner eingefahrenen Position festgehalten wird.

Die Kupplungsorgane 52 werden nach Bedarf vom Pumpenfahrer vor dem Ausfahren der Stützausleger in einer der ausgewählten Positionen auf die Kupplungszapfen aufgesteckt. Damit lässt sich einfach und zuverlässig eine der drei in Fig. 3a, 4a und 5a gezeigten Ausfahrpositionen für den anschließenden Ausfahrvorgang einstellen. Unerwünschte Zwischenpositionen der Teleskopausleger werden ausgeschlossen. Grundsätzlich wäre es auch möglich, das Kupplungsorgan zwischen den beiden Kupplungszapfen 50",50''' anzubringen. In diesem Fall könnten beim Ausfahrvorgang nur das erste und das dritte Teleskopsegment 40',40''' ausgefahren werden, während das zweite Teleskopsegment 40" in seiner eingefahrenen Stellung innerhalb des dritten Teleskopsegments 40''' verbleiben würde.

Zusammenfassend ist folgendes festzuhalten: Die Erfindung bezieht sich auf einen Stützausleger 38 einer Stützkonstruktion für fahrbare Arbeitsmaschinen, insbesondere für Autobetonpumpen. Der Stützausleger 38 ist mehrfach teleskopierbar und weist einen am Fahrgestell 10 schwenkbar angeordneten Ausschubkasten 38 sowie einen in den Ausschubkasten eingreifenden, relativ zu diesem verschiebbaren, aus mehreren ineinander geführten Teleskopsegmenten 40',40",40''' bestehenden Teleskopteil auf. Um mit einfachen Mitteln eine Schmalabstützung herbei führen zu können, weisen der Ausschubkasten 38 und zumindest ein Teil der Teleskopsegmente 40",40''' Koppelstellen 50',50",50''' auf, an denen sie im relativ zueinander eingefahrenen Zustand unter Herstellung einer verschiebefesten Verbindung paarweise miteinander kuppelbar sind.

## Patentansprüche

1. Stützausleger für fahrbare Arbeitsmaschinen, mit einem an einem Fahrgestell (10) angeordneten Ausschubkasten (38), mit einem in den Ausschubkasten (38) eingreifenden, relativ zu diesem verschiebbaren, aus mehreren ineinander geführten Teleskopsegmenten (40',40",40''') bestehenden Teleskopteil (40), und mit einem am vorderen Ende des ersten Teleskopsegments (40') angeordneten Fußteil (26), wobei der Ausschubkasten (38) und zumindest ein Teil der Teleskopsegmente (40",40''') Koppelstellen (50',50",50''') aufweisen, an denen sie im relativ zueinander eingefahrenen Zustand unter Herstellung einer verschiebefesten Verbindung paarweise miteinander kuppelbar sind, **dadurch gekennzeichnet, dass** an den Koppelstellen (50',50",50''') Kupplungszapfen angeordnet sind, die im eingefahrenen Zustand der Teleskopsegmente paarweise einen definierten Abstand voneinander aufweisen, und dass mindestens ein Kupplungsorgan (52) vorgesehen ist, das so ausgebildet ist, dass es mit jeweils zwei ausgewählten Koppelstellen (50',50",50''') unter Herstellung einer der verschiebefesten Verbindungen kuppelbar ist.

2. Stützausleger nach Anspruch 1, **dadurch gekennzeichnet, dass** die Koppelstellen (50',50",50''') im Bereich der vorderen Enden des Ausschubkastens (38) und zumindest eines Teils der Teleskopsegmente (40",40''') angeordnet sind.

3. Stützausleger nach Anspruch 1 oder 2, **dadurch gekennzeichnet, dass** das Kupplungsorgan (52) zwei im Abstand der Kupplungszapfen voneinander angeordnete Ausnehmungen (53) zum Aufstecken auf ausgewählte Kupplungszapfen aufweist.

4. Stützausleger nach einem der Ansprüche 1 bis 3, **dadurch gekennzeichnet, dass** der Ausschubkasten (38) einen in definiertem Abstand vom ausschubkastenseitigen Kupplungszapfen (50') angeordneten Haltezapfen (54) für das Kupplungsorgan (52) aufweist.

5. Stützausleger nach einem der Ansprüche 1 bis 4, **dadurch gekennzeichnet, dass** die Kupplungszapfen (50',50",50''') eine Querbohrung zur Aufnahme eines vorzugsweise als Federstecker (56) ausgebildeten Sperrglieds aufweisen.

6. Stützausleger nach einem der Ansprüche 1 bis 5, **dadurch gekennzeichnet, dass** das Kupplungsorgan die Gestalt einer Lasche aufweist.

7. Stützkonstruktion für Arbeitsmaschinen, **gekennzeichnet durch** mindestens zwei Stützausleger nach einem der Ansprüche 1 bis 7.

8. Arbeitsmaschine, **gekennzeichnet durch** eine Stützkonstruktion nach Anspruch 7.

9. Arbeitsmaschine nach Anspruch 8, **dadurch gekennzeichnet, dass** diese als Autobetonpumpe ausgebildet ist.

## Claims

1. Support boom for mobile work machines, having a push-out box (38) disposed on a chassis (10), having a telescope part (40) consisting of several telescope segments (40', 40'', 40''') guided inside one another, which engages into the push-out box (38), and is displaceable relative to the latter, and having a foot part (26) disposed on the front end of the first telescope segment (40'), preferably adjustable vertically, wherein the push-out box (38) and at least part of the telescope segments (40'', 40''') have coupling points (50', 50'', 50''') at which they can be coupled with one another, in pairs, in the state in which they are retracted, relative to one another, producing a connection that is resistant to displacement, **characterized in that** coupling pins are disposed at the coupling points (50', 50'', 50'''), which pins have a defined distance from one another in the retracted state of the telescope segments, in pairs, and that the coupling organ (52) has two recesses (53) disposed at the distance of the coupling pins from one another, for being set onto selected coupling pins.

2. Support boom according to claim 1, **characterized in that** the coupling points (50', 50'', 50''') are disposed in the region of the front end of the push-out box (38) and at least of a part of the telescope segments (40'', 40''').

3. Support boom according to claim 1 or 2, **characterized by** a coupling organ (52) that is configured in such a manner that it can be coupled with two selected coupling points (50', 50'', 50'''), in each instance, producing the connection that is resistant to displacement.

4. Support boom according to one of claims 1 to 3,
**characterized in that** the push-out box (38) has a holder pin (54) for the coupling organ (52), which pin is disposed at a defined distance from the coupling pin (50') on the push-out box side.

5. Support boom according to one of claims 1 to 4,
**characterized in that** the coupling pins (50', 50'', 50''') have a crosswise bore for accommodating a locking element, preferably configured as a spring plug (56).

6. Support boom according to one of claims 1 to 5,
**characterized in that** the coupling organ has the shape of a tab.

7. Support construction for work machines, **characterized by** at least two support booms according to one of claims 1 to 6.

8. Work machine, **characterized by** a support construction according to claim 7.

9. Work machine according to claim 8, **characterized in that** it is designed to be a mobile concrete pump.

## Revendications

1. Bras d'appui destiné à des machines de travail roulantes, avec un caisson télescopique (38) disposé sur un châssis (10), avec un élément télescopique (40) s'engageant dans le caisson télescopique (38), mobile en translation par rapport à ce caisson et constitué de plusieurs segments télescopiques (40', 40", 40"') dirigés les uns dans les autres, et avec une partie de pied (26) disposée à l'extrémité avant du premier segment télescopique (40'), sachant que le caisson télescopique (38) et au moins une partie des segments télescopiques (40", 40"') présentent des points d'accouplement (50', 50", 50"') au niveau desquels ils peuvent, dans l'état rentré relativement les uns par rapport aux autres, être accouplés par paires par réalisation d'une liaison bloquée en translation, **caractérisé en ce que** des tenons d'accouplement sont disposés aux points d'accouplement (50', 50", 50"'), tenons qui, dans l'état rentré des segments télescopiques, présentent par paires un espacement défini, et **en ce qu'**il est prévu au moins un organe d'accouplement (52) qui est réalisé de telle sorte qu'il peut être accouplé à deux points d'accouplement sélectionnés respectifs (50', 50", 50"') en réalisant une des liaisons bloquées en translation.

2. Bras d'appui selon la revendication 1, **caractérisé en ce que** les points d'accouplement (50', 50", 50"') sont disposés dans la région des extrémités avant du caisson télescopique (38) et d'au moins une partie des segments télescopiques (40", 40"').

3. Bras d'appui selon la revendication 1 ou 2, **caractérisé en ce que** l'organe d'accouplement (52) présente deux évidements (53) disposés à un espacement mutuel égal à celui des tenons d'accouplement et destinés à être emboîtés ou enfichés sur des tenons d'accouplement sélectionnés.

4. Bras d'appui selon l'une des revendications 1 à 3, **caractérisé en ce que** le caisson télescopique (38) présente un tenon de fixation (54) pour l'organe d'accouplement (52), tenon qui est disposé à un espacement défini du tenon d'accouplement (50') du caisson télescopique.

5. Bras d'appui selon l'une des revendications 1 à 4, **caractérisé en ce que** les tenons d'accouplement (50', 50", 50"') présentent un perçage transversal pour recevoir une pièce de verrouillage réalisée de préférence sous forme de goupille élastique (56).

6. Bras d'appui selon l'une des revendications 1 à 5, **caractérisé en ce que** l'organe d'accouplement présente la forme d'une éclisse.

7. Structure d'appui destinée à des machines de travail, **caractérisée par** au moins deux bras d'appui selon l'une des revendications 1 à 6.

8. Machine de travail, **caractérisée par** une structure d'appui selon la revendication 7.

9. Machine de travail selon la revendication 8, **caractérisée en ce qu'**elle est réalisée sous la forme d'une pompe à béton roulante.
